# EUROPÄISCHE PATENTSCHRIFT

(11) **EP 2 381 126 B1**
(45) Veröffentlichungstag und Bekanntmachung des Hinweises auf die Patenterteilung: **21.03.2012**
(21) Anmeldenummer: 11161411.1
(22) Anmeldetag: 07.04.2011
(51) Int. Cl.: F16F 9/05, F16F 9/38, B60G 11/27, B60G 17/052

(54) **Luftfeder mit doppelter Rollfalte**
Air spring with double rolling lobe
Ressort pneumatique à double soufflet roulant

(30) Priorität: 12.04.2010 DE 102010016400
(43) Veröffentlichungstag der Anmeldung: 26.10.2011
(73) Patentinhaber: Continental Teves AG & Co. oHG, 60488 Frankfurt (DE)
(72) Erfinder: Gleu, Jens Uwe, 30855 Langenhagen (DE)
(74) Vertreter: Beck, Jörg

(56) Entgegenhaltungen:
- WO-A1-02/086346
- DE-A1- 1 505 315
- DE-A1- 1 908 373
- DE-A1- 2 016 973
- DE-A1- 2 064 751
- DE-A1- 10 224 287
- DE-A1-102007 004 037
- DE-B- 1 049 248
- JP-A- 2005 042 852
- US-A- 3 549 142
- US-A- 3 790 147
- US-A- 3 850 437
- US-A1- 2004 026 837

## Beschreibung

Die Erfindung betrifft eine Luftfedereinheit gemäß dem Oberbegriff des Patentanspruchs 1. Eine solche Luftfederanlage weist häufig auch einen zentrisch angeordneten teleskopierbaren Dämpfer auf, mit einem als Dämpfergehäuse ausgebildeten Dämpferrohr, einem innenliegenden Dämpfungskolben und einer einerseits am Dämpfungskolben und anderseits am Luftfederdeckel angebundenen Kolbenstange. Das Dämpfergehäuse ist dabei oft auf seiner Außenseite als Abrollkolben ausgebildet.

Luftfedereinheiten bzw. Luftfeder- und Dämpfereinheiten dienen heute insbesondere in Personenkraftwagen als besonders komfortable Federungselemente und sorgen für ein angenehmes Fahrgefühl bei einer komfortablen Federung, die ggf. je nach Straßenverhältnissen und Beladung angepasst werden kann.

Es verbleibt jedoch bisher gelegentlich ein dem Fachmann bekanntes so genanntes "Harshness-Problem", d.h. ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Lagerungen, Materialien, Eigendämpfungen, Trägheiten etc. entsteht. Bei Luftfeder- und Dämpfereinheiten ist diese überlagerte Rauhigkeit (Harshness) u.a. abhängig vom anliegenden Arbeitsdruck, mit denen die Rollbälge und die übrigen Materialien beaufschlagt werden und abhängig von den Lagerungen zwischen den einzelnen Bauteilen bzw. zwischen den Bauteilen und der Karosserie. Bei hohem Druck führt der auf die Rollbälge wirkende Druck in den genannten Bereichen zur Verhärtung des Materials und zur Veränderung der inneren Federung / Dämpfung, so dass das Federungsverhalten in den Harshness-Bereichen unangenehmer wird.

Eine gattungsgemäße Luftfeder für Fahrzeuge ist z.B. aus der DE-AS 1 049 248 bekannt. Offenbart ist hier ein luftgefüllter federnder Balg, der zwischen Traggliedern eingespannt ist und unter Ausbildung einer doppelten Rollfalte teleskopartig umgestülpt wird, wodurch ein weiches und angenehmes Federn erreicht wird. Der Balg ist durch einen Ringgürtel gegen radiale Ausdehnung gesichert. Die Tragglieder sind dabei in ihrer Abrollkontur konisch ausgebildet, sollen aber - ohne weitere Beschreibung von Vorteilen - auch zylindrisch ausgeführt werden können. Bei hohem Druck führt auch hier der auf den Balg wirkende Druck zur Verhärtung des Materials und zur Veränderung der inneren Federung / Dämpfung.

Die DE 195 08 980 C1 offenbart ein Luftfederbein, bei dem das Gehäuse des Stoßdämpfers, also das Dämpferrohr, einen flanschartigen Kragen aufweist, an dem der Abrollkolben über einen anvulkanisierten elastischen Ring angebunden ist. Der elastische Ring ermöglicht eine gewisse Taumelbeweglichkeit des Abrollkolbens der Luftfeder zum Gehäuse des Stoßdämpfers und infolgedessen eine Verschwenkbarkeit der Luftfeder gegenüber dem Stoßdämpfer. Eine Verbesserung in Bezug auf das Harshness-Verhalten ist jedoch mit der dort offenbarten Konstruktion nicht darstellbar, auch wenn die Härte des dort als Lagerung vorgesehenen elastischen Ring für die Veränderung der Taumelbeweglichkeit einstellbar ist.

Aus der US 3 850 437 A ist eine Luftfedereinheit der eingangs genannten Gattung bekannt. Bei der vorbekannten Luftfedereinheit weisen sowohl der Luftfederdeckel als auch der Abrollkolben eine Abrollkontur auf. Der Luftfederrollbalg ist unter Ausbildung je einer Rollfalte am Luftfederdeckel und am Abrollkolben so befestigt, dass er beim Ein- und Ausfedern der Luftfedereinheit an beiden Abrollkonturen abrollt. Dabei sind im Arbeitsbereich die Abrollkonturen von Luftfederdeckel und Abrollkolben zylindrisch ausgebildet. Die Abrolldurchmesser auf Luftfederdeckel und Abrollkolben sind gleich.

In der JP 2005 042 852 A ist eine ähnliche Luftfedereinheit beschrieben, wobei im Arbeitsbereich die abrollkonturen von Luftfederdeckel und abrollkolben zylindrisch ausgebildet sind und die Abrolldurchmesser auf Luftfederdeckel und Abrollkolben gleich sind.

Aus der DE 15 05 315 A1 ist ein Membran- oder Diaphragmakissen bekannt, bei dem ein Lager- oder Führungselement zwischen Luftfederrollbalg und Karosserie oder Fahrwerk vorgesehen ist, das eine vertikale Bewegung des Luftfederrollbalgs einschränkt. Außerdem ist das Lager- oder Führungselement zwischen Luftfederrollbalg und Luftfederdeckel oder Luftfederrollbalg und Abrollkolben angeordnet ist. Die DE 10 2007 004 037 A1 offenbart ebenfalls diese Merkmale.

Im Stand der Technik sind auch Versuche bekannt, das Komfortproblem bei Luftfeder-Rollbälgen durch Verwendung von besonderen Bälgen zu lösen, die durch ihre Bauweise, die verwendeten Materialien und die Einbaubedingungen (Druckbereich, Rollfaltenbreite) einen möglichst geringen Harshnesseffekt aufweisen. Auch wurde versucht, durch Verwendung von besonders gestalteten Bauteilen (Lager, Unterlegscheiben usw.) im Kraftpfad der Luftfeder, die Einwirkungen von Schwingungen höherer Frequenz und geringer Amplitude zu entkoppeln, die insbesondere bei kleinen Weganregungen überproportional in das Chassis eingetragen werden.

Der Erfindung lag also die Aufgabe zugrunde, den grundlegenden Konflikt zu lösen, der darin besteht, dass Luftfedereinheiten und deren Bauteile, Lagerungen etc. einerseits auf die erforderlichen hohen Tragkräfte (6kN bis 20kN) angepasst werden müssen und andererseits zur Reduzierung der Harshness eine im Vergleich dazu sehr kleine Steifigkeit aufweisen müssen. Weiterhin bestand die Aufgabe darin, für eine die gegensätzlichen Forderungen nach hoher Tragkraft einerseits und gutem Harshness-Verhalten andererseits erfüllende Luftfedereinheit eine möglichst einfache, leicht herstellbare und sichere Konstruktion vorzuschlagen, die dazu den vorgegebenen Bauraumgrößen und Gewichtsanforderungen entspricht.

Gelöst wird diese Aufgabe durch die Merkmale des Hauptanspruchs. Weitere vorteilhafte Ausbildungen sind in den Unteransprüchen offenbart.

Dadurch dass im Bereich der Abrolllänge im Arbeitspunkt der Luftfeder, die Abrollkonturen von Luftfederdeckel und Abrollkolben zylindrisch ausgebildet und die Abrolldurchmesser auf Luftfederdeckel und Abrollkolben gleich ist, ist die wirksame tragende Fläche beider zueinander geöffneter Rollfalten gleich, jedenfalls im Rahmen der Fertigungstoleranzen, und die Abrollkonturen von Luftfederdeckel und Abrollkolben bleiben über den Abrollweg im Arbeitsbereich unverändert.

Erfindungsgemäß ist der Luftfederrollbalg jeweils durch die obere und untere Rollfalte, die sich an seinen der mittlere Bereich oben und unten anschließen, mit dem Deckel einerseits und dem Kolben andererseits verbunden. Diese doppelte Rollfalte an sich ist bekannt. Bei der hier vorliegenden Lösung wird jedoch durch die zusätzliche erfindungsgemäße Ausbildung von Abrollkonturen und Abrolldurchmesser ein besonderer synergetischer Effekt erreicht. Dieser besteht darin, dass der mittlere Teil des Luftfederrollbalges durch die erfindungsgemäße Ausführung eine entkoppelnde, nahezu kraftfreie, axiale Relativbewegung gegenüber den beiden Armaturen, d.h. gegenüber Luftfederdeckel und Abrollkolben vollführen kann, ohne dass diese sich dabei relativ zueinander bewegen müssen und ohne dabei deren für die Gesamtfunktion der Luftfeder relevantes Verhalten zu beeinflussen.

Im Stand der Technik wird eine solche Ausführung einer Luftfeder mit doppelte Rollfalte gerade aufgrund dieser Bewegungsmöglichkeit möglichst vermieden, da sie in üblichen Konstruktionen mangels Ausbildung einer definierten vertikalen Gleichgewichtsposition als nachteilig angesehen wird.

Tatsächlich ist aber die erfindungsgemäße Ausbildung, bei der sich der Luftfederrollbalg unter Ausbildung zweier Rollfalten in der momentanen Länge auf den Armaturen ablegt, bei der Abrolldurchmesser auf den beiden Armaturen identisch oder nahezu identisch ist, und bei der die Abrollkontur der Armaturen um die Position/Einbaulänge, deren Abrollkomfort verbessert werden soll, zylindrisch oder nahezu zylindrisch ist und also im relevanten Arbeitspunkt /Arbeitsbereich keine relevanten Durchmesseränderungen aufweist, hervorragend geeignet, um Probleme im Hinblick auf die "Harshness" zu vermeiden. Der einzige Widerstand gegen die Bewegung des Balges ergibt sich dabei nämlich aus den Rollwiderständen der beiden Rollfalten.

Durch die erfindungsgemäße Ausbildung ist es möglich, die relativ hohe Tragkraft der Luftfeder weiterhin aufzubringen und auf Lastschwankungen mit Ein- bzw. Ausfederbewegungen zu reagieren (Grundprinzip der Luftfederung).

Theoretisch kann man die reale Luftfeder, sei sie durch eine Außenführungshülse geführt oder nicht, als die Parallelschaltung einer idealen Gasfeder und eines Hysterese-Elementes (ähnlich eines Reibelementes) beschreiben. Unter der idealen Gasfeder ist eine Gasfeder zu verstehen, die für rein isotherme und adiabate Druckänderungen hysteresefrei arbeitet und eine bestimmte Federrate besitzt.

Durch die erfindungsgemäße Ausbildung entsteht funktional die Serienschaltung der Kraftraten der Abrollwiderstandskräfte (Harshness-Steifigkeit), wobei bekanntermaßen die Serienschaltung zweier gleichgroßer Federraten bzw. Steifigkeiten, wie sie hier durch die entgegengesetzt ausgebildeten Rollfalten entstehen, in der Kehrwertsumme die nach außen wirksame Federrate bzw. Steifigkeit halbiert. Nach diesem Prinzip erzeugt für die bei verschiedenen Betriebszuständen der Luftfeder sich einstellenden Harshness-Steifigkeiten der Rollfalten auf gleichgroßen zylindrischen Abrollkonturen nach außen eine halb so große Harshness-Steifigkeit. Dies ist eine beträchtliche Größenordnung, da übliche Harshnessverbesserungen im einstelligen bis sehr niedrigen zweistelligen Prozentbereich liegen.

Der erfindungsgemäßen Aufgabe wird auch durch eine alternative Lösung Rechnung getragen, nämlich dadurch, dass im Arbeitsbereich die Abrollkonturen von Luftfederdeckel und Abrollkolben im komfortrelevanten Abrollbereich zylindrisch ausgebildet sind und außerhalb des komfortrelevanten Bereiches nur mit in Abrollrichtung ansteigenden Abrolldurchmessern gestaltet sind. Unter komfortrelevantem Bereich versteht man je nach Fahrzeug, Fahrwerkabstimmung und Herstellerphilosophie verschiedene Ausdehnungen in Ein- und Ausfederrichtung relativ zur normalen Einbaulänge der Luftfeder. So kann z.B. für einen PKW mit ca. 1500kg Masse und einer durch die Achskonstruktion bedingten Federübersetzung von ca. 0.7 der komfortrelevante Bereich 20mm Ein- und 40mm Ausfederweg an der Luftfeder betragen. Das ergäbe eine komfortrelevante Höhe auf den Abrollkonturen von zusammen ca. 30mm, verteilt auf Luftfederdeckel und Kolben, in der die Kontur zylindrisch und an Deckel und Kolben mit nahezu gleichem Durchmesser ausgebildet sein müßte. Die Abrollbereiche auf Luftfederdeckel und -kolben müßten dann nur monoton steigende Abrolldurchmesser aufweisen, nämlich am Luftfederdeckel nach oben hin und am Luftfederkolben nach unten hin gesehen.

Wie bereits dargelegt, wird mit der erfindungsgemäßen Ausbildung eine Harshnessreduktion um 50% gegenüber einer bekannten Luftfeder mit einfacher Rollfalte erreicht. Gleiches gilt gegenüber einer Luftfeder mit doppelter Rollfalte aus dem Stand der Technik, welche im Arbeitspunkt unterschiedliche und/oder nichtzylindrischen Abrollkonturen aufweist.

Deshalb kann bei einer solchen Verbesserung einer realen Luftfeder auf einen kleinen Anteil dieser Komfortverbesserung verzichtet und stattdessen den Luftfederrollbalg vertikal zentriert werden. Dies ist vorteilhaft für die Kontrolle der Gesamtkennlinie der Luftfeder und für deren Lebensdauer.

Die Grundidee einer solchen Zentrierung besteht dann darin, dass eine relativ undefinierte vertikalen Gleichgewichtsposition des Luftfederrollbalgs durch geringe Unterschiede im Abrolldurchmesser von Abrollkolben und Deckel vermieden wird und der Luftfederrollbalg dazu gebracht wird, eine leichte Eigenbewegung hin zu einer stabilen Position auszuführen. Diese Position ist dadurch gekennzeichnet, dass die Rollfalte in dieser Position wieder die gleiche kraftwirksame effektive Fläche hat wie die gegenüberliegende Rollfalte. Einer Bewegung der Rollfalten des Luftfederrollbalgs hin zu dieser Position wirken nur die relativ kleinen Abrollwiderstandskräfte entgegen.

In einer vorteilhaften Ausbildung weist die Luftfedereinheit ein Lager- oder Führungselement zwischen Luftfederrollbalg und Karosserie oder Fahrwerkauf, das eine vertikale Bewegung des Luftfederrollbalgs einschränkt, ohne eine radiale Aufweitung des Luftfederrollbalgs zu behindern. Ein solches Führungselement wirkt auf einfache Weise als zentrierendes Lagerelement, welches ebenfalls eine relativ undefinierte vertikalen Gleichgewichtsposition des Luftfederrollbalgs verhindert.

Die Federrate (Zentriersteifigkeit) eines solchen Lagers wirkt parallel zur Harshness-Steifigkeit und soll deshalb einerseits sehr klein ausgelegt werden. Andererseits muss gerade bei geführten Luftfedern die Zentriersteifigkeit so groß sein, dass kein im relevanten Frequenzbereich mit Eigenschwingungen reagierendes Schwingungssystem des mittleren Bereiches des Luftfederkörpers in Federrichtung entsteht. Deshalb kann die nichtlineare Abstimmung dieses Lagers mit weicher Anlaufsteifigkeit, idealerweise ausgebildet als Spiel, oder mit später einsetzender Kraftprogression und/oder Dämpfung ausgestattet sein.

Eine weitere, weil besonders einfach herzustellende vorteilhafte Ausbildung besteht darin, dass das Lager- oder Führungselement zwischen Luftfederrollbalg und Luftfederdeckel oder zwischen Luftfederrollbalg und Abrollkolben angeordnet ist.

Dieses Zentrierlager kann sowohl bei einer ungeführten Luftfeder verwendet werden als auch einer geführten Luftfeder, sodass eine weitere vorteilhafte Ausbildung darin besteht, dass der Luftfederrollbalg mit einer Außenführungshülse versehen ist und das Lager- oder Führungselement ein auf der Außenseite der Außenführungshülse angeordnetes, vorzugsweise mindestens teilweise umlaufendes U-Profil und ein am Luftfederdeckel angeordnetes und in das U-Profil eingreifendes Element aufweist, welches vorzugsweise ringförmig und axial elastisch ausgebildet ist.

Eine weitere vorteilhafte Ausbildung besteht darin, dass das in das U-Profil eingreifendes Element als am Luftfederdeckel angeordnete Bürste oder Bürstenring ausgebildet ist. Eine z.B. ringförmig ausgebildete Bürste hat neben der sanft und mit Spiel anlaufenden Kraftrate auch eine gute Dichtungsfunktion, die die Rollfalte der Luftfeder vor Verunreinigungen schützt.

Die Vorteile der erfindungsgemäßen Lösungen bestehen zusammenfassend darin, dass die Harshness der Luftfeder gegenüber der Anordnung mit einer Rollfalte bzw. der Anordnung mit üblicher doppelter Rollfalte nahezu halbiert werden kann. Dies kann im Hochkomfortbereich von geführten Luftfedern ein möglicherweise marktbestimmender Vorteil werden, da ein solcher Komfortsprung allein durch z.B. die Materialgestaltung des Balges nicht darstellbar ist.

Im Applikationsbereich von ungeführten Luftfedern, die vorwiegend aus Kosten- und Bauraumgründen eingesetzt werden, also dort, wo sich aus ebendiesen Kosten- und Bauraumgründen geführte Luftfedern mit deren Funktionsvorteilen verbieten, kann man mit dem Einsatz der erfinderischen Luftfedereinrichtung ungeführte Luftfedern auf das Funktionsniveau von geführten Luftfedern heben, ohne Kosten- und Bauraumnachteile in Kauf nehmen zu müssen.

Anhand eines Ausführungsbeispiels soll die Erfindung näher erläutert werden. Es zeigen
- Fig. 1: eine erfindungsgemäße Luftfedereinheit in Form einer Prinzipskizze,
- Fig. 2: eine weitere Ausführung der erfindungsgemäße Luftfedereinheit mit einem Luftfederdeckel, der im Bereich der Abrolllänge so ausgebildet ist, dass sich eine vertikale Gleichgewichtsposition des Luftfederrollbalgs einstellt,
- Fig. 3: Eine erfindungsgemäße Luftfedereinheit mit einem Lager- oder Führungselement zwischen Luftfederrollbalg und Luftfederdeckel, das eine vertikale Bewegung des Luftfederrollbalgs einschränkt,
- Fig. 4: Ein Diagramm mit den Harshness-Steifigkeiten einer erfindungsgemäßen Luftfedereinheit bei kleiner werdenden Amplituden.

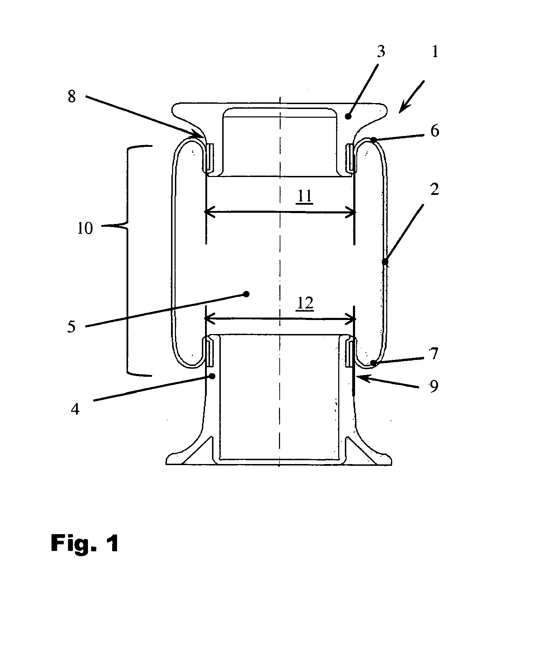

Die Fig. 1 zeigt eine erfindungsgemäße Luftfedereinheit 1 zwischen Karosserie und Fahrwerk eines hier nicht näher dargestellten Fahrzeuges, mit einen Luftfederrollbalg 2, der einerseits an einem Luftfederdeckel 3 und andererseits an einem in seiner äußeren Abrollkontur als rotationssymmetrischer Körper ausgebildeten Abrollkolben 4 befestigt ist.

Der Luftfederrollbalg 2, der Luftfederdeckel 3 und der Abrollkolben 4 umschließen einen mit Druckluft gefüllten Arbeitsraum 5.

Die Luftfedereinheit 1 beinhaltet eine hier nicht näher dargestellte Luftversorgungsanlage und zugehörigen Leitungen, Ventilen und weiteren Einrichtungen zur Regelung des im Arbeitsraum befindlichen Druckluftvolumens.

Sowohl der Luftfederdeckel 3 als auch der Abrollkolben 4 weisen eine Abrollkontur 8, 9 auf. Der Luftfederrollbalg 2 ist unter Ausbildung je einer Rollfalte 6 und 7 am Luftfederdeckel 3 und am Abrollkolben 4 so befestigt ist, dass er beim Ein- und Ausfedern der Luftfedereinheit an beiden Abrollkonturen 8 und 9 abrollt.

Im Arbeitsbereich 10 sind die Abrollkonturen 8, 9 von Luftfederdeckel 3 und Abrollkolben 4 zylindrisch ausgebildet sind und die Abrolldurchmesser 11 und 12 auf Luftfederdeckel 3 und Abrollkolben 4 gleich groß, d.h. bis auf evtl. Fertigungstoleranzen identisch.

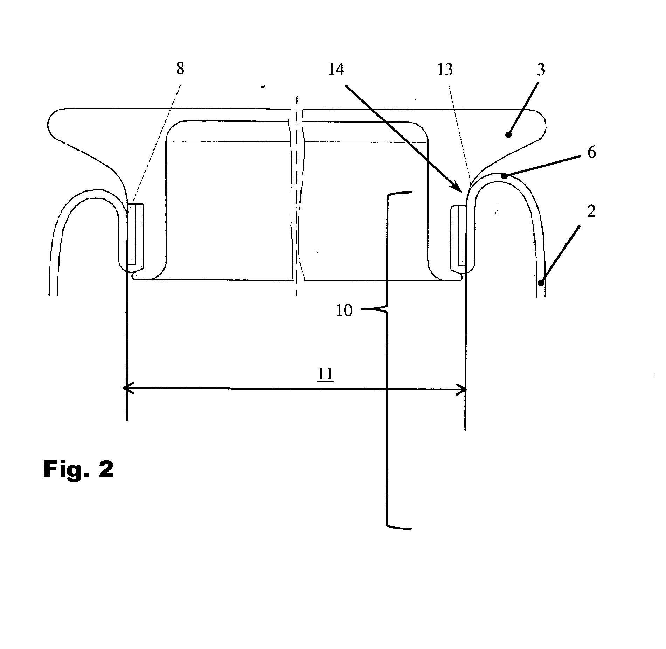

Fig. 2 zeigt eine weitere Ausführung der erfindungsgemäßen Luftfedereinheit mit einem Luftfederdeckel, der im Bereich der Abrolllänge so ausgebildet ist, dass sich eine vertikale Gleichgewichtsposition des Luftfederrollbalgs einstellt (vertikale Zentrierung), dies im Vergleich zu einer Ausführung ohne eine solche vertikale Zentrierung.

Hierzu ist auf der linken Seite der Fig. 2 die Ausführung ohne vertikale Zentrierung und mit einer demzufolge zylindrische Abrollkontur 8 im oberen Teil des Arbeitsbereiches 10 dargestellt. Auf der rechten Seite ist eine Ausführung mit vertikaler Zentrierung gegenübergestellt, welche einen Luftfederdeckel aufweist, dessen Abrollkontur 13 im oberen Teil des Arbeitsbereiches, d.h. in einem Bereich der Abrolllänge, so ausgebildet ist, dass sich eine vertikale Gleichgewichtsposition der Luftfederrollbalges 2 einstellt, in der die wirksamen tragenden Flächen der oberen und unteren Rollfalte gleich sind.

In dem auf der rechten Seite der Fig. 2 dargestellten Beispiel soll die Abrollkontur am nichtdargestellten Kolben einen marginal größeren Durchmesser aufweisen als die als Auflaufkontur ausgebildete Abrollkontur 13 der oberen Rollfalte am Deckel. Entsprechend umgekehrte und/oder vermischte Konstellationen funktionieren natürlich auch.

Aufgrund dieses Durchmesser-Unterschieds bewegt sich der Balg infolge der entstandenen unterschiedlichen wirksamen Flächen der oberen und unteren Rollfalte vom größeren Abrolldurchmesser weg - hin zum kleineren Abrolldurchmesser, also in diesem Fall nach oben vom Kolben in Richtung Deckel. Diese Bewegung ist dadurch gekennzeichnet, dass sie angetrieben durch den vorhandenen Innendruck volumenneutral ist, somit den Druck nicht ändert und das Gesamtfederverhalten der Luftfeder nicht beeinflußt. Der Balg schiebt die obere Rollfalte also solange vor sich her nach oben, bis der Durchmesser in deren Berührungspunkt 14 an der Auflaufkontur wieder dem zugehörigen Durchmesser im Berührungspunkt der nichtdargestellten unteren Rollfalte gleicht. Wenn das erreicht ist, hat man eine Gleichgewichtsposition gegenüber Kolben und Deckel, so dass die Position des Luftfederrollbalges stabil ist (zentriert).

Diese Position kann jedoch durch relativ kleine Kräfte, die je nach Ausführung der Auflaufkontur und der Durchmesserunterschiede der oberen und unteren zylindrischen Abrollkontur nur unwesentlich größer sind als die durch die Balghysterese hervorgerufenen Widerstandskräfte gegen das Abrollen, leicht wieder verlassen werden.

Das Grundprinzip der erfindungsgemäßen Reihenschaltung der Harshness-Steifigkeiten bleibt erhalten. Den Harshnesssteifigkeiten parallel geschaltet werden nun die geometrisch justierbaren Zentriersteifgkeiten. Damit wird die nach Außen wirksame Harshness zugunsten der Zentrierung wieder etwas größer, bleibt aber weiterhin deutlich unterhalb der Harshness herkömmlicher Luftfedern.

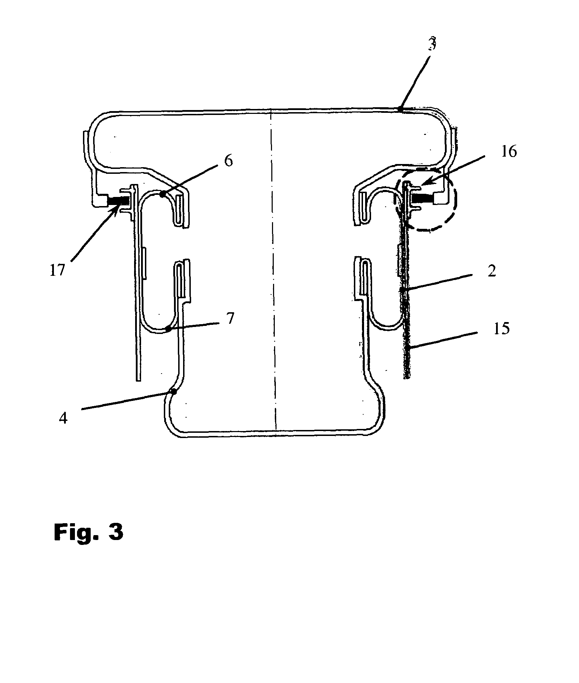

Fig. 3 zeigt eine weitere Ausführungsform der erfindungsgemäßen Luftfedereinheit in Form einer Prinzipskizze mit einem Lager- oder Führungselement zwischen Luftfederrollbalg und Luftfederdeckel, das eine vertikale Bewegung des Luftfederrollbalgs einschränkt und somit ebenfalls als "vertikale Zentrierung" wirkt. Bei dieser Ausführung ist bei der der Luftfederrollbalg 2 mit einer Außenführungshülse 15 versehen.

Das Lager- oder Führungselement weist einerseits ein umlaufendes U-Profil 16 auf der Außenseite der Außenführungshülse 15 auf Am Luftfederdeckel 3 ist ein am in das U-Profil 16 eingreifendes Element 17 angeordnet, das durch das Eingreifen in das und das Zusammenwirken mit dem U-Profil eine vertikale Bewegung des Luftfederrollbalgs begrenzt.

Ein solches zentrierendes Lagerelement kann auch bei einer ungeführten Luftfeder verwendet werden, ist aber eher bei einer geführten Luftfeder das Mittel der Wahl.

Seine Kraftrate (Zentriersteifigkeit) wirkt ebenfalls parallel zur Harshness-Steifigkeit und soll deshalb einerseits sehr klein ausgelegt werden, andererseits muß gerade bei geführten Luftfedern die Zentriersteifigkeit so groß sein, dass, wie bereits ausgeführt, kein im relevanten Frequenzbereich mit Eigenschwingungen reagierendes Schwingungssystem des mittleren Bereiches des Luftfederkörpers in Federrichtung entsteht.

Daher ist es vorteilhaft, diese zentrierende Lagerelement mit nichtlinearer Abstimmung zu versehen, wobei eine weiche Anlaufsteifigkeit, idealerweise ausgebildet als Spiel und eine spät einsetzender Kraftprogression und/oder Dämpfung vorhanden ist.

In der in der Fig. 3 gezeigten Ausführung ist das in das U-Profil 16 eingreifendes Element 17 als ringförmige Bürste ausgebildete. Diese hat neben der sanft mit Spiel anlaufenden Kraftrate auch eine gute Dichtungsfunktion, die die obere Rollfalte der Luftfeder vor Verunreinigungen schützt.

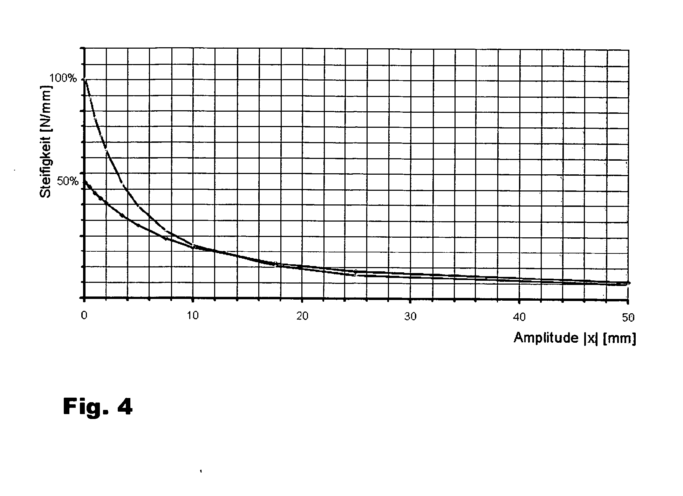

Fig. 4 zeigt ein Diagramm mit den Harshness-Steifigkeiten einer erfindungsgemäßen Luftfedereinheit bei kleiner werdenden Amplituden. Deutlich erkennt man hier die Halbierung der "Harshness-Steifigkeit" einer Luftfeder bei kleiner werdenden Amplituden.

### Bezugszeichenliste

### (Teil der Beschreibung)

**1.** Luftfedereinheit
**2.** Luftfederrollbalg
**3.** Luftfederdeckel
**4.** Abrollkolben
**5.** Arbeitsraum
**6.** Rollfalte
**7.** Rollfalte
**8.** Abrollkontur
**9.** Abrollkontur
**10.** Arbeitsbereich
**11.** Abrolldurchmesser
**12.** Abrolldurchmesser
**13.** Abrollkontur
**14.** Berührungspunkt
**15.** Außenführungshülse
**16.** Umlaufendes Lager- und Führungselement (U-Profil)
**17.** Eingreifendes Element (Bürste)

## Patentansprüche

1. Luftfedereinheit (1) mit
- einem Luftfederrollbalg (2),
- einem Luftfederdeckel (3),
- einem Abrollkolben (4)
- wobei der Luftfederrollbalg (2) einerseits am Luftfederdeckel (3) und andererseits am Abrollkolben (4) befestigt ist und der Luftfederrollbalg (2), der Luftfederdeckel (3) und der Abrollkolben (4) einen mit Druckluft gefüllten Arbeitsraum (5) umschließen,
- einer Luftversorgungsanlage und zugehörigen Leitungen, Ventilen und weiteren Einrichtungen zur Regelung des im Arbeitsraum befindlichen Druckluftvolumens,
wobei sowohl Luftfederdeckel (3) als auch Abrollkolben (4) eine Abrollkontur (8, 9) aufweisen und der Luftfederrollbalg (2) unter Ausbildung je einer Rollfalte (6, 7) am Luftfederdeckel (3) und am Abrollkolben (4) so befestigt ist, dass er beim Ein- und Ausfedern der Luftfedereinheit an beiden Abrollkonturen (8, 9) abrollt,
wobei im Arbeitsbereich (10) die Abrollkonturen (8, 9) von Luftfederdeckel (3) und Abrollkolben (4) zylindrisch ausgebildet sind und die Abrolldurchmesser (11, 12) auf Luftfederdeckel (3) und Abrollkolben (4) gleich sind, **dadurch gekennzeichnet, dass** ein Lager- oder Führungselement (16, 17) zwischen Luftfederrollbalg (2) und Karosserie oder Fahrwerk vorgesehen ist, das eine vertikale Bewegung des Luftfederrollbalgs einschränkt
und dass das Lager- oder Führungselement (16, 17) zwischen Luftfederrollbalg (2) und Luftfederdeckel (3) oder Luftfederrollbalg (2) und Abrollkolben (4) angeordnet ist und dass der Luftfederrollbalg (2) mit einer Außenführungshülse (15) versehen ist und das Lager- oder Führungselement ein auf der Außenseite der Außenführungshülse (15) angeordnetes U-Profil (16) und ein am Luftfederdeckel angeordnetes und in das U-Profil eingreifendes Element (17) aufweist.

2. Luftfedereinheit nach Anspruch 1, **dadurch gekennzeichnet, dass** auf Luftfederdeckel (3) und/oder Abrollkolben (4) der Abrolldurchmesser (13) in einem Bereich der Abrolllänge so ausgebildet ist, dass sich eine vertikale Gleichgewichtsposition der Luftfederrollbalges (2) einstellt, in der die wirksamen tragenden Flächen der oberen und unteren Rollfalte gleich sind.

3. Luftfedereinheit nach Anspruch 2, bei der auf Luftfederdeckel und/oder Abrollkolben der Abrolldurchmesser (13) in einem außerhalb des komfortrelevanten Bereiches befindlichen Bereich der Abrolllänge monoton steigend ausgebildet ist, so dass sich eine vertikale Gleichgewichtsposition der Luftfederrollbalges (2) einstellt.

4. Luftfedereinheit nach Anspruch 1, bei der das in das U-Profil eingreifendes Element (17) als am Luftfederdeckel angeordnete(r) Bürste oder Bürstenring ausgebildet ist.

## Claims

1. Air spring unit (1) with
- an air spring rolling bellows (2),
- an air spring cover (3),
- a rolling piston (4),
- wherein the air spring rolling bellows (2) is fastened at one end to the air spring cover (3) and at the other end to the rolling piston (4), and the air spring rolling bellows (2), the air spring cover (3) and the rolling piston (4) enclose a working space (5) filled with compressed air,
- an air supply system and associated lines, valves and further devices for controlling the compressed air volume in the working space,
wherein both the air spring cover (3) and the rolling piston (4) have a rolling contour (8, 9), and the air spring rolling bellows (2) is fastened to the air spring cover (3) and to the rolling piston (4), with a respective rolling lobe (6, 7) being formed, such that said air spring rolling bellows rolls along the two rolling contours (8, 9) during the spring deflection and rebound of the air spring unit,
wherein, in the working region (10), the rolling contours (8, 9) of the air spring cover (3) and rolling piston (4) are of cylindrical design, and the rolling diameters (11, 12) on the air spring cover (3) and rolling piston (4) are identical, **characterized in that** a bearing or guide element (16, 17) is provided between the air spring rolling bellows (2) and bodywork or chassis, said bearing or guide element restricting a vertical movement of the air spring rolling bellows, and **in that** the bearing or guide element (16, 17) is arranged between the air spring rolling bellows (2) and air spring cover (3) or air spring rolling bellows (2) and rolling piston (4), and **in that** the air spring rolling bellows (2) is provided with an outer guide sleeve (15), and the bearing or guide element has a U-profile (16) arranged on the outside of the outer guide sleeve (15) and an element (17) which is arranged on the air spring cover and engages in the U-profile.

2. Air spring unit according to Claim 1, **characterized in that**, on the air spring cover (3) and/or rolling piston (4), the rolling diameter (13) is formed in a region of the rolling length in such a manner that a vertical position of equilibrium of the air spring rolling bellows (2) arises, in which the effective supporting surfaces of the upper and lower rolling lobes are identical.

3. Air spring unit according to Claim 2, in which, on the air spring cover and/or rolling piston, the rolling diameter (13) is designed to rise monotonously in a region of the rolling length outside the region relevant to comfort, and therefore a vertical position of equilibrium of the air spring rolling bellows (2) arises.

4. Air spring unit according to Claim 1, in which the element (17) engaging in the U-profile is designed as brush or brush ring arranged on the air spring cover.

## Revendications

1. Unité de ressort pneumatique (1) avec
- un soufflet roulant de ressort pneumatique (2),
- un couvercle de ressort pneumatique (3),
- un piston de roulement (4),
- dans laquelle le soufflet roulant de ressort pneumatique (2) est attaché d'une part au couvercle de ressort pneumatique (3) et d'autre part au piston de roulement (4) et le soufflet roulant de ressort pneumatique (2), le couvercle de ressort pneumatique (3) et le piston de roulement (4) entourent une chambre de travail (5) remplie d'air comprimé,
- une installation de fourniture d'air et les conduites, soupapes et autres dispositifs accessoires pour la régulation du volume d'air comprimé se trouvant dans la chambre de travail,
dans laquelle aussi bien le couvercle de ressort pneumatique (3) que le piston de roulement (4) présentent un contour de roulement (8, 9) et le soufflet roulant de ressort pneumatique (2) est attaché au couvercle de ressort pneumatique (3) et au piston de roulement (4), en formant chaque fois un pli roulant (6, 7), de telle manière qu'il roule sur les deux contours de roulement (8, 9) lors de la compression et de la détente de l'unité de ressort pneumatique,
dans laquelle les contours de roulement (8, 9) du couvercle de ressort pneumatique (3) et du piston de roulement (4) sont de forme cylindrique dans la zone de travail (10) et les diamètres de roulement (11, 12) sur le couvercle de ressort pneumatique (3) et le piston de roulement (4) sont égaux,
**caractérisée en ce qu'**il est prévu entre le soufflet roulant de ressort pneumatique (2) et la carrosserie ou le train de roulement un élément d'appui ou de guidage (16, 17), qui limite un mouvement vertical du soufflet roulant de ressort pneumatique, **en ce que** l'élément d'appui ou de guidage (16, 17) est disposé entre le soufflet roulant de ressort pneumatique (2) et le couvercle de ressort pneumatique (3) ou entre le soufflet roulant de ressort pneumatique (2) et le piston de roulement (4), et **en ce que** le soufflet roulant de ressort pneumatique (2) est muni d'une gaine de guidage extérieure (15) et l'élément d'appui ou de guidage présente un profilé en U disposé sur le côté extérieur de la gaine de guidage extérieure (15) et un élément (17) disposé sur le couvercle de ressort pneumatique et s'engageant dans le profilé en U (16).

2. Unité de ressort pneumatique selon la revendication 1, **caractérisée en ce que**, sur le couvercle de ressort pneumatique (3) et/ou sur le piston de roulement (4), le diamètre de roulement (13) est réalisé, dans une zone de la longueur de roulement, de telle manière qu'il s'établisse une position d'équilibre verticale du soufflet roulant (2) du ressort pneumatique, dans laquelle les surfaces portantes actives des plis roulants supérieur et inférieur sont égales.

3. Unité de ressort pneumatique selon la revendication 2, dans laquelle, sur le couvercle de ressort pneumatique et/ou sur le piston de roulement, le diamètre de roulement (13) est réalisé, dans une zone de la longueur de roulement située à l'extérieur de la zone de confort, avec une croissance monotone, de telle manière qu'il s'établisse une position d'équilibre verticale du soufflet roulant (2) du ressort pneumatique.

4. Unité de ressort pneumatique selon la revendication 1, dans laquelle l'élément (17) s'engageant dans le profilé en U est réalisé sous la forme d'une brosse ou d'un anneau de brosse disposé(e) sur le couvercle de ressort pneumatique.
